# EUROPEAN PATENT SPECIFICATION

(11) **EP 2 590 089 B1**
(45) Date of publication and mention of the grant of the patent: **14.10.2015**
(21) Application number: 12007378.8
(22) Date of filing: 26.10.2012
(51) Int. Cl.: G06F 17/30

(54) **Rule type columns in database**
Regeltypspalten in Datenbank
Colonnes de type de règle dans une base de données

(30) Priority: 03.11.2011 US 201113288807
(43) Date of publication of application: 08.05.2013
(73) Proprietor: SAP SE, 69190 Walldorf (DE)
(72) Inventor: Paul, Joydeep, 69190 Walldorf (DE); Lohiya, Nitesh, 69190 Walldorf (DE); Ziegler, Carsten, 69190 Walldorf (DE); Beuter, Hans-Georg, 69190 Walldorf (DE)
(74) Representative: Müller-Boré & Partner Patentanwälte PartG mbB

(56) References cited:
- US-A1- 2006 224 542
- ADELBERG B ET AL: "THE STRIP RULE SYSTEM FOR EFFICIENTLY MAINTAINING DERIVED DATA", SIGMOD RECORD, ACM, NEW YORK, NY, US, vol. 26, no. 2, 1 June 1997 (1997-06-01), pages 147-158, XP000730505, ISSN: 0163-5808, DOI: 10.1145/253260.253287
- WIDOM J: "The Starburst active database rule system", IEEE TRANSACTIONS ON KNOWLEDGE AND DATA ENGINEERING, IEEE SERVICE CENTER, LOS ALAMITOS, CA, US, vol. 8, no. 4, 1 August 1996 (1996-08-01), pages 583-595, XP002493830, ISSN: 1041-4347, DOI: 10.1109/69.536251
- STONEBRAKER M ET AL: "THE POSTGRES NEXT-GENERATION DATABASE MANAGEMENT SYSTEM", COMMUNICATIONS OF THE ACM, ASSOCIATION FOR COMPUTING MACHINERY, INC, UNITED STATES, vol. 34, no. 10, 1 October 1991 (1991-10-01), pages 78-92, XP000266968, ISSN: 0001-0782, DOI: 10.1145/125223.125262
- Anonymous: "Oracle 11g Virtual columns | Sharing Oracle Database", , 6 April 2010 (2010-04-06), XP055138393, Online Retrieved from the Internet: URL:http://mehrajdba.wordpress.com/2010/04 /06/oracle-11g-virtual-columns/ [retrieved on 2014-09-05]

## Description

### BACKGROUND

The present invention relates to storage of data in databases, and in particular, to extension of a data definition language (DDL) to introduce a new column type: a rule type column.

Unless otherwise indicated herein, the approaches described in this section are not prior art to the claims in this application and are not admitted to be prior art by inclusion in this section.

Databases comprising are highly useful tools allowing users to manage complex relationships between different types of data. For example, a business rule is a composition of single or multiple logical or computational expressions. Such rules may find expression within database structures comprising rows and columns.

Existing database systems, however, generally do not provide the capability of defining derived columns based on certain complex rule evaluation. Rather, in many cases derived or transient columns need to be defined at the application layer. As the database user may not be fluent in the language of the application layer, this can reduce flexibility of the database.

In certain cases, databases may allow simple calculations to be encapsulated in column definitions. For example, a virtual column may be defined by evaluating an expression, the result of which becomes the metadata of the column. However, a virtual column is defined only during table creation or modification. Specifically, a virtual column is derived using the logic contained in the expression and other column values. The expressions deriving the value of a virtual column are statically defined during the table creation and are not reused from a repository. The expressions are limited to computations or condition evaluation, rather than complex business logic. In this manner, virtual columns are static and cannot be modeled based on complex business rules.

Certain conventional approaches may provide the use of a CREATE RULE SQL statement. This feature allows creation of rules, which when bound to a database column will restrict the values that can be inserted into that column. Once a rule is created using a CREATE RULE statement, it can be bound to a column of a table. However, binding a rule does not affect the current data in the database table.

Certain database applications may also rely on stored procedures or functions to encapsulate many of rules. However, such reliance upon stored rules permits less reusability of the database. Moreover the semantics of such stored rules are less transparent, again reducing flexibility of the database for the business users.

Finally, placing the rules remote from a user in storage and/or within the application layer, can interfere with the ongoing relevance of the database to the user. In particular, maintaining the accuracy of such rules is cumbersome, and changing them is difficult and typically requires intervention by one fluent in the language of the database application layer.

Instead, it is desirable that users should be able to maintain rules in a separate repository. This will permit reusability of rules.

The present disclosure addresses these and other issues with systems and methods for extending a data definition language (DDL) to introduce a new column type known as the rule type column, which can be readily accessed by a database user.

Document B. Adelberg et al "The STRIP Rule System For Efficient Maintaining Derived Data" SIGMOD'97, ACM, vol. 26, no.2, June 01, 1997 relates to to an implementation of a rule system for databases as part of the STanford Real-time Information Processor (STRIP). The STRIP rule system is an extension of SQL3-type rules that allows groups of rule actions to be batched together.

Document US 2006/0224542 Al relates to a rule set defined for composite events. Instances of the associated primitive events are added to a database-centric rules engine one at a time. Intermediate states of the rule evaluations are persistently stored in the database. The state information generated from evaluating the rules belonging to a single rule set is stored in a single relational table and managed using direct SQL and DML commands.

### SUMMARY

A data definition language (DDL) may be extended by introducing a new column type: a rule type column. Rules in a database are modeled using patterns such as a decision table or a decision tree, by specifying rule content through accessible user interfaces instead of programming constructs. A rule type column can be created using the DDL statements to define its storage type (transient or permanent), and/or whether it is generic or non-generic. A transient rule column will be populated only when a query is performed. A non-transient rule column will be populated when an insert is performed, and may be re-triggered during an update. A generic rule type column allows a user to define a specific rule each time an insert is performed (e.g. each row might trigger a different rule). A non-generic rule type column allows definition of one rule statically during the initial creation, with this rule being the same for all rows. The system of rules evaluation can be integrated with the language processor. Rule processing can be triggered whenever a query is fired or during an insert/update operation, depending on whether the rule type column is transient or persistent.

An embodiment of a computer-implemented method for extending a data definition language, DDL, to introduce a new column type which is referred to as a rule type column in a table of a database as claimed in claim 1, comprises, providing a database comprising data organized in rows and columns; receiving a DDL statement for creating, a table in the database, the table comprising the rule type column, wherein the DDL statement reflects the logic of a business rule; creating the rule type column in the table of the database in accordance with the DDL statement to define whether the rule type column is transient or non-transient and whether the rule type column is generic or non-generic; deriving, during a query or an insert or update operation, a value from the table of the database for the rule type column; and displaying the derived value for the rule type column; wherein: when the rule type column is transient, the value for the rule type column is derived only during a query and is not persisted in the database; when the rule type column is non-transient, the value for the rule type column is derived during an insert or update operation and is persisted in the database; when the rule type column is generic, the business rule is not defined during creation of thea table including the rule type column but specified during an insert or update operation; and when the rule type column is non-generic, the business rule is defined during creation of the table including the rule type column and the same for all the rows. Claims 2 and 3 are directed to the corresponding computer product and computer system, respectively.

According to certain embodiments, the value may be persisted in the database. In other embodiments, the value is not persisted in the database.

According to some embodiments, the rule type column is the same for all of the rows.

In some embodiments, the rule is expressed at a time of creation of the database. In certain embodiments, the rule is expressed at a time of an insert or update operation.

The following detailed description and accompanying drawings provide a better understanding of the nature and advantages of the present invention.

### BRIEF DESCRIPTION OF THE DRAWINGS

Figure 1 shows a simplified view of a decision table.
Figure 2 shows a simplified view of a decision tree.
Figure 3 shows a simplified view of a formula expression.
Figure 4 shows a highly simplified view of an approach utilizing a rule type column according to an embodiment.
Figure 4A shows one example of creation of a transitory rule type column using DDL statements.
Figure 4B shows one example of creation of a non-transitory rule type column using DDL statements.
Figure 4C shows one example of creation of a non-generic rule type column using DDL statements.
Figure 4D shows one example of creation of a generic rule type column using DDL statements.
Figure 4E shows a simplified example of a process flow according to an embodiment.
Figure 5 shows an example of a computer system.

### DETAILED DESCRIPTION

Described herein are techniques for providing a new column type, a rule type column, in a database structure. Rules in a database are modeled using patterns such as a decision table, decision tree, or formula, by specifying rule content through accessible user interfaces instead of programming constructs.

A rule type column can be created using statements in a data definition language (DDL) to define characteristics such as storage type, for example whether the rule type column is transient or permanent.

In particular, a transient rule column will be populated only when a query is performed. A non-transient rule column will be populated when an insert is performed, and may be re-triggered during an update.

Statements in the data definition language may also determine whether the rule type column is generic or non-generic. A generic rule column allows a user to define a specific rule each time an insert is performed (e.g. each row might trigger a different rule). A non-generic rule column allows definition of one rule statically during the initial creation, with this rule being the same for all rows.

The system of rules evaluation can be integrated with the language processor. Rule processing can be triggered whenever a query is fired or during an insert/update operation, depending on whether the rule type column is transient or persistent.

As mentioned above, a business rule is a composition of single or multiple logical or computational expressions. The logic of a business rule can be modeled using various types of rule based constructs.

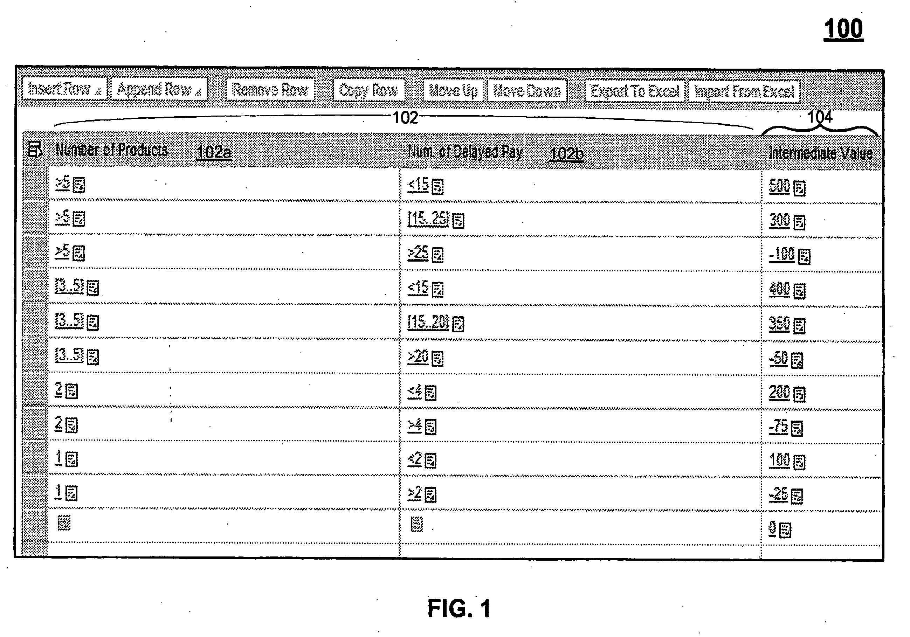

One example of a rule based construct is a decision table. FIG. 1 shows a simplified view of such a decision table 100.

Decision table 100 comprises of a set of condition columns 102 and a result column 104. In this particular decision table, the condition columns (Number of Products 102a and Number of Delayed Payments 102b) are used to determine the value in the result column 104 (here an Intermediate Value).

The rows are processed in order from top to bottom and left to right. Once a match is detected, the corresponding result columns are returned.

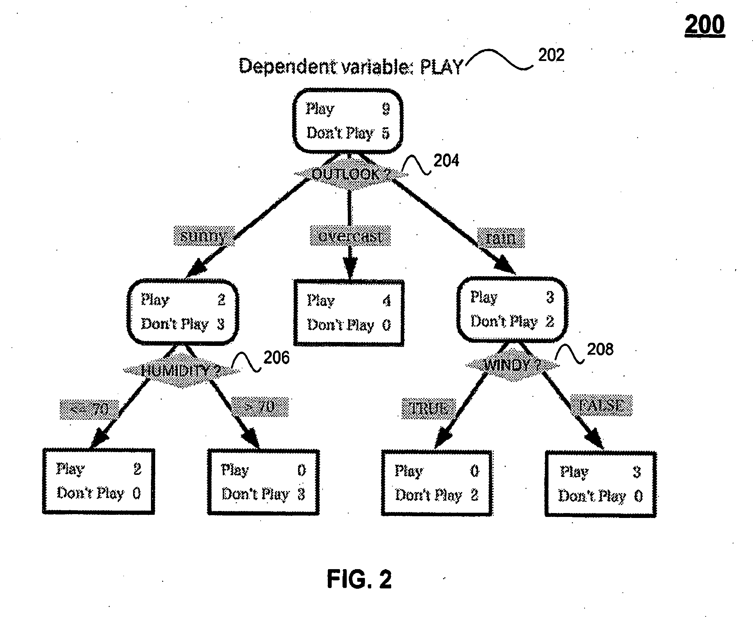

Another example of a rule based construct is a decision tree. FIG. 2 shows a simplified view of such a decision tree in the form of a generic search tree 200. According to the rule expressed by this search tree, a dependent variable 202 (here PLAY), is determined on the basis of the values for a combination of multiple factors such as OUTLOOK 204, HUMIDITY 206, and WIND 208.

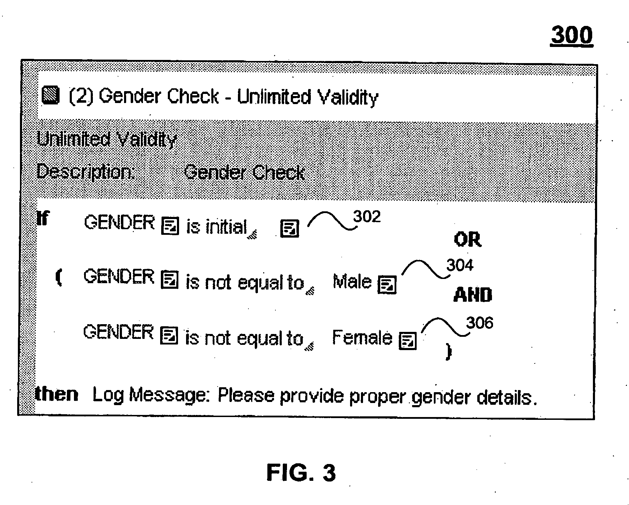

Still another example of a rule based construct is a formula expression. FIG. 3 shows a simplified view of such a formula expression 300, here in the form of an IF-THEN rule. In particular, this particular rule governs the input of gender information into a form, where factors such as initial gender input 302 and available gender types 304 and 306, are used to determine a result 308 in the form of a message communicated to the user.

Embodiments of the present invention allow rules to be modeled and stored in the database, in the form of DDL statements rather than in the application layer. This renders the rules accessible to the user, for easy reference, reuse, and updating.

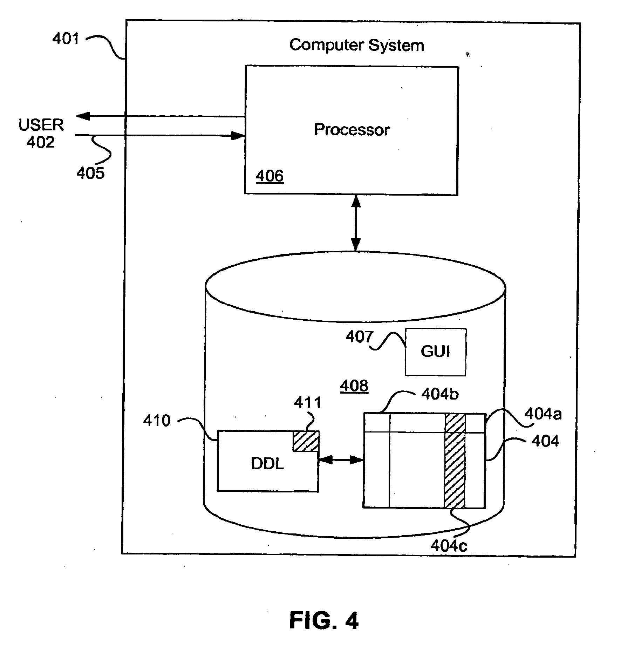

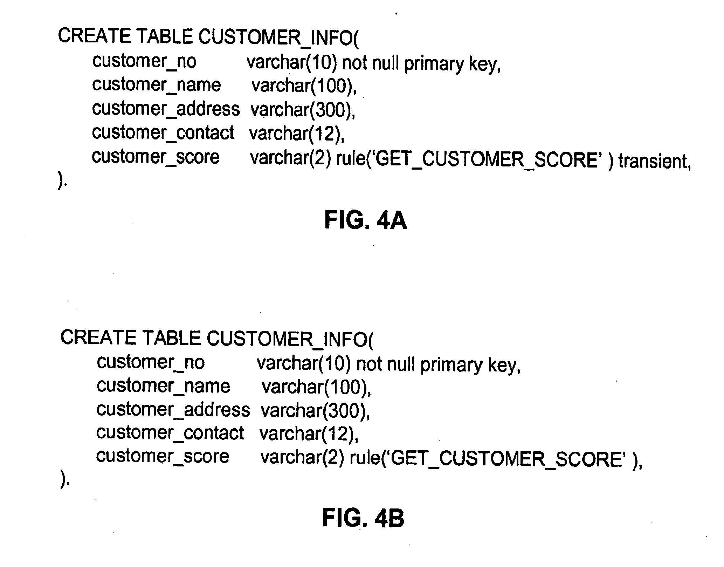

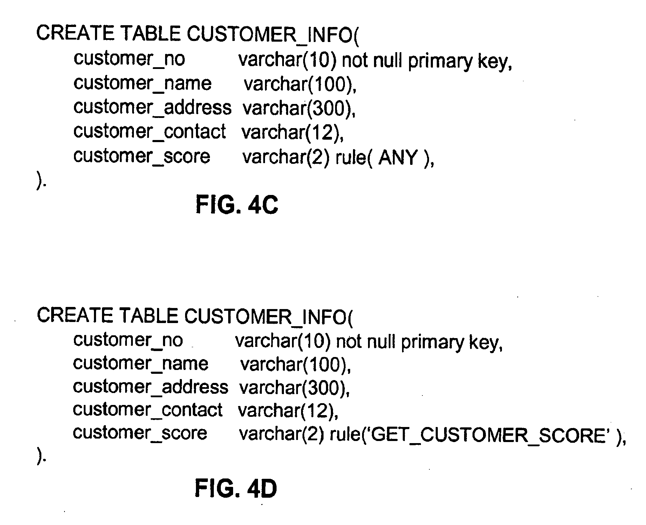

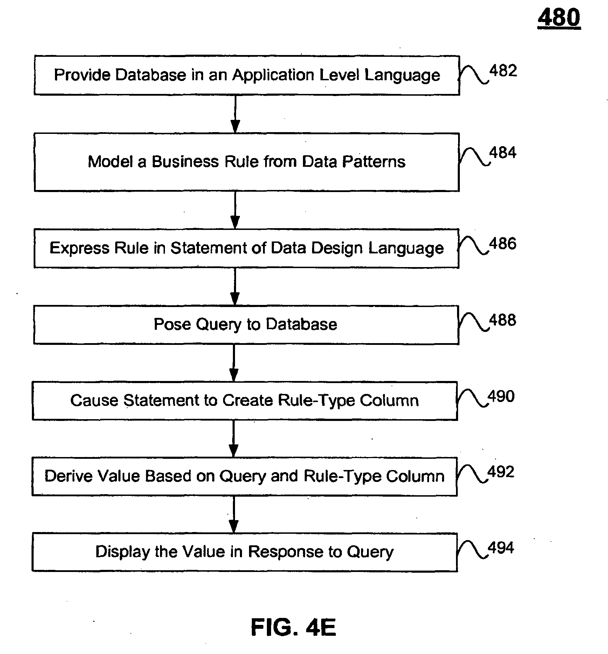

Figure 4 shows a highly simplified view of an approach according to embodiments of the present invention. Human user 402 is in communication with computer system 400 comprising database 404 comprising data in rows 404a and columns 404b and stored on non-transitory computer readable storage medium 408. The user is configured to pose a query 405 to the database through a processor 406 that is linked to the computer readable storage medium.

Code stored on the non-transitory computer-readable storage medium provides instructions to the processor to perform one or more functions. For example, certain code defines a graphic user interface (GUI) 407 allowing the user to formulate and communicate the query to the database via the data design level 410.

While Figure 4 shows a particular embodiment wherein the code forming the GUI is present on the same non-transitory computer readable storage medium as the code for the database, this is not required. According to certain embodiments, the code for the GUI could be stored on a different non-transitory computer readable storage medium, for example one located at a remote site and in communication with the database through a computer network in which the database is centrally stored.

As described below, statements 411 in the data design language of the level 410, may reflect the logic of a business rule. Such rules may be modeled from patterns in the database using a decision table, decision tree, or formula. Beneficially, according to embodiments of the present invention, this rule can be expressed in the higher level DDL, rather than as a construct of a lower level programming language.

Expression of the rule in the DDL, allows for the creation of a corresponding rule type column in 404c. As discussed below, this rule type column may or may not be persisted in the database.

Figure 4A shows one example of creation of a rule type column using DDL statements. In this example, the customer_score field is a rule type column which is transient. That is, the rule type column signifies the value for that column will be derived only during a query (or view), but will not be persisted in the database.

Alternatively, a rule type column may be non-transient. Figure 4B shows an example of creation of such a rule type column using DDL statements. In a non-transient type rule column, the value for that column will be derived during an insert or update operation and will be persisted. The persisted value can be changed when a rule is modified.

According to certain embodiments, a rule type column may be generic. Figure 4C shows an example of creation of such a rule type column using DDL statements. In such a generic type rule column, the rule is not defined during the table creation, but can be specified during an insert or update operation.

A rule type column may alternatively be non-generic. Figure 4D shows an example of creation of such a rule type column using DDL statements. In such a non-generic type rule column, the rule is defined during the table creation and is the same for all the rows.

Processes according to certain embodiments of the present invention may be summarized in the highly simplified flow chart shown in Figure 4E. In particular, process 480 comprises a first step 482 of providing a database created in an application level language (e.g. SQL) and comprising rows and columns.

A second step 484 comprises modeling a business rule from patterns in the data of the database. This modeling can be done utilizing structures such as decision trees, decision tables, or formulas.

A third step 486 comprises expressing the rule in a statement of a data design language. A fourth step 488 comprises posing a query to the database.

A fifth step 490 comprises causing the DDL statement to create a rule type column. A sixth step 492 comprises deriving a value from the database based upon the query and the rule type column. A seventh step 494 of the process comprises displaying the value to a database user in response to the query.

Embodiments of the present invention may offer certain advantages over conventional approaches. One possible benefit is to facilitate creation of rule type columns as part of data definition language. This allows complex rules to be modeled inside the database, and used as part of the column type definition.

Moreover, the rule type columns created a part of the data definition language can reduce the complexity of the database, and also the time consumed during operation (TCO). For example application code logic is minimized, and instances of the processor having to reference the application code are reduced. Moreover, stored procedures and triggers associated with conventional database approaches can be eliminated.

Implementation of the rule type columns in the database also allows more transparency to business users. This is because the rules are now accessible in the higher level DDL, rather than deep within the application code. Because managing complex logic in the form of business rules is much easier than writing code, this accessibility enables users to design and model the rules in an intuitive and non-programmable way.

Furthermore, the rule based approach offered by embodiments of the present invention can facilitate data migration. For example, during data migration columns may have to be migrated from a source to a target based on certain rules. Usually such rules are modeled using a design workbench available with standard tools. One example is the SAP Business Objects Data Services tool. However, utilizing a rule type column expressed by DDL statements, this process can be integrated into the target database itself.

The apparatuses, methods, and techniques described herein may be implemented as a computer program (software) executing on one or more computers. The computer program may further be stored on a non-transitory computer readable medium. The non-transitory computer readable medium may include instructions for performing the processes described.

In the following description, for purposes of explanation, examples and specific details are set forth in order to provide a thorough understanding of various embodiments. It will be evident, however, to one skilled in the art that the present invention as defined by the claims may include some or all of the features in these examples alone or in combination with other features described below, and may further include modifications and equivalents of the features and concepts described herein.

The computer system may comprise a software server. A number of software servers together may form a cluster, or logical network of computer systems programmed with software programs that communicate with each other and work together to process requests.

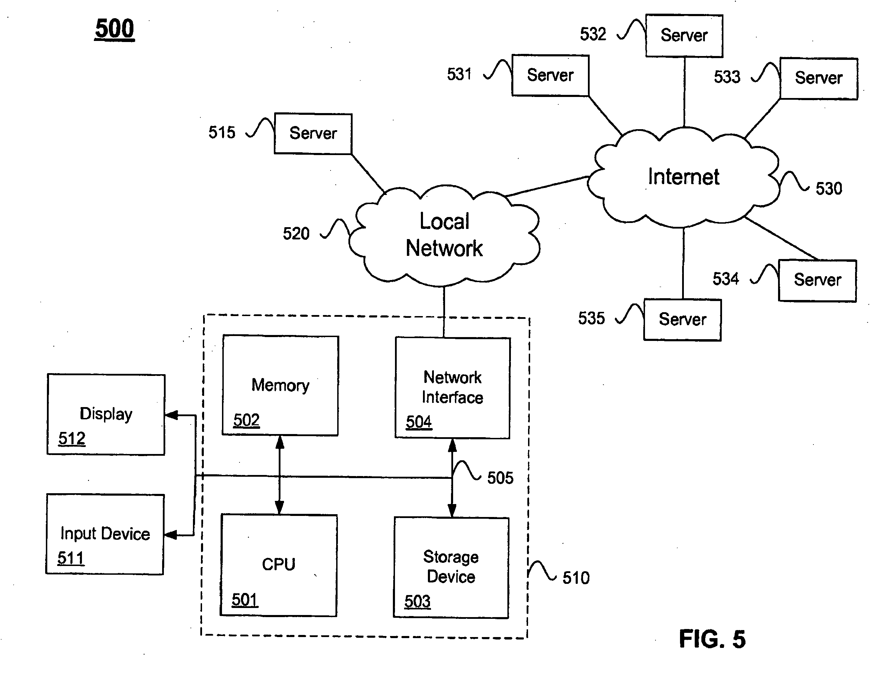

An example computer system 510 is illustrated in Fig. 5. Computer system 510 includes a bus 505 or other communication mechanism for communicating information, and a processor 501 coupled with bus 505 for processing information.

Computer system 510 also includes a memory 502 coupled to bus 505 for storing information and instructions to be executed by processor 501, including information and instructions for performing the techniques described above, for example. This memory may also be used for storing variables or other intermediate information during execution of instructions to be executed by processor 501. Possible implementations of this memory may be, but are not limited to, random access memory (RAM), read only memory (ROM), or both.

A storage device 503 is also provided for storing information and instructions. Common forms of storage devices include, for example, a hard drive, a magnetic disk, an optical disk, a CD-ROM, a DVD, a flash memory, a USB memory card, or any other medium from which a computer can read.

Storage device 503 may include source code, binary code, or software files for performing the techniques above, for example. Storage device and memory are both examples of computer readable media.

Computer system 510 may be coupled via bus 505 to a display 512, such as a cathode ray tube (CRT) or liquid crystal display (LCD), for displaying information to a computer user. An input device 511 such as a keyboard and/or mouse is coupled to bus 505 for communicating information and command selections from the user to processor 501. The combination of these components allows the user to communicate with the system. In some systems, bus 505 may be divided into multiple specialized buses.

Computer system 510 also includes a network interface 504 coupled with bus 505. Network interface 504 may provide two-way data communication between computer system 510 and the local network 520. The network interface 504 may be a digital subscriber line (DSL) or a modem to provide data communication connection over a telephone line, for example. Another example of the network interface is a local area network (LAN) card to provide a data communication connection to a compatible LAN. Wireless links are another example. In any such implementation, network interface 504 sends and receives electrical, electromagnetic, or optical signals that carry digital data streams representing various types of information.

Computer system 510 can send and receive information, including messages or other interface actions, through the network interface 504 across a local network 520, an Intranet, or the Internet 530. For a local network, computer system 510 may communicate with a plurality of other computer machines, such as server 515. Accordingly, computer system 510 and server computer systems represented by server 515 may form a cloud computing network, which may be programmed with processes described herein.

In an example involving the Internet, software components or services may reside on multiple different computer systems 510 or servers 531-535 across the network. The processes described above may be implemented on one or more servers, for example. A server 531 may transmit actions or messages from one component, through Internet 530, local network 520, and network interface 504 to a component on computer system 510. The software components and processes described above may be implemented on any computer system and send and/or receive information across a network, for example.

Particularly, there is provided a non-transitory computer readable storage medium particularly embodying a computer program product for performing a method, said method comprising: providing a database created in an application level language and comprising data organized in rows and columns; expressing a rule modeled from data patterns, in a statement in a data design language; posing a query to the database; causing the statement in the data design language to communicate with the database to create a rule type column; deriving a value based on the query and a row intersecting the rule type column; and displaying the value for the rule type column in response to the query Particularly, the method comprises persisting the value in the database. Further particularly, the method comprises not persisting the value in the database. Further particularly, the method comprises having the rule type column be the same for all of the row. Further particularly, the method comprises expressing the rule at a time of creation of the database. Further particularly, the method comprises expressing the rule at a time of an insert or update operation.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the scope of the invention as defined by the claims.

## Claims

1. A computer-implemented method for extending a data definition language, DDL (410), to introduce a new column type which is referred to as a rule type column (404c) in a table of a database (404), the method comprising:
providing (482) a database (404) comprising data organized in rows (404a) and columns (404b);
receiving a DDL statement (411) for creating a table in the database (404), the table comprising the rule type column (404c), wherein the DDL statement (411) reflects the logic of a business rule;
creating the rule type column (404c) in the table of the database in accordance with the DDL statement (411) to define whether the rule type column (404c) is transient or non-transient and whether the rule type column (404c) is generic or non-generic;
deriving (492), during a query or an insert or update operation, a value from the table of the database (404) for the rule type column (404c); and
displaying (494) the derived value for the rule type column (404c);
wherein:
when the rule type column (404c) is transient, the value for the rule type column (404c) is derived only during a query execution and is not persisted in the table of the database;
when the rule type column (404c) is non-transient, the value for the rule type column (404c) is derived during an insert or update operation and is persisted in the table of the database;
when the rule type column (404c) is generic, the business rule is not defined during creation of the table including the rule type column (404c) but specified during an insert or update operation; and
when the rule type column (404c) is non-generic, the business rule is defined during creation of the table including the rule type column (404c) and the same for all the rows.

2. A computer program product comprising computer-readable instructions which, when loaded and executed on a suitable system, perform the steps of the method according to claim 1.

3. A computer system for extending a data definition language, DDL (410), to introduce a new column type which is referred to as a rule type column (404c) in a table of a database (404), the system comprising:
one or more processors; and
a software program executed by the one or more processors and making the computer system to perform the method according to claim 1.

## Patentansprüche

1. Computerimplementiertes Verfahren zur Erweiterung einer Datendefinitionssprache DDL (410), um einen neuen Spaltentyp, auf den als eine Regelspalte (404c) Bezug genommen wird, in eine Tabelle einer Datenbank (404) einzuführen, wobei das Verfahren umfasst:
Bereitstellen (482) einer Datenbank (404), die in Zeilen (404a) und Spalten (404b) organisierte Daten umfasst;
Empfangen einer DDL-Anweisung (411) zur Erzeugung einer Tabelle in der Datenbank (404), wobei die Tabelle die Regeltypspalte (404c) umfasst, wobei die DDL-Anweisung (411) die Logik einer Geschäftsregel wiedergibt;
Erzeugen der Regeltypspalte (404c) in der Tabelle der Datenbank gemäß der DDL-Anweisung (411), um zu definieren, ob die Regeltypspalte (404c) transient oder nicht transient ist und ob die Regeltypspalte (404c) generisch oder nicht generisch ist;
Ableiten (492) eines Werts für die Regeltypspalte (404c) aus der Tabelle der Datenbank (404) während einer Abfrage- oder einer Einfüge- oder Aktualisierungsoperation; und
Anzeigen (494) des abgeleiteten Werts für die Regeltypspalte (404c);
wobei:
wenn die Regeltypspalte (404c) transient ist, der Wert für die Regeltypspalte (404c) nur während einer Abfrageausführung abgeleitet wird und nicht in der Tabelle der Datenbank bleibt;
wenn die Regeltypspalte (404c) nicht transient ist, der Wert für die Regeltypspalte (404c) während einer Einfüge- oder Aktualisierungsoperation abgeleitet wird und in der Tabelle der Datenbank bleibt;
wenn die Regeltypspalte (404c) generisch ist, die Geschäftsregel während der Erzeugung der Tabelle mit der Regeltypspalte (404c) nicht definiert wird, aber während einer Einfüge- oder Aktualisierungsoperation spezifiziert wird; und
wenn die Regeltypspalte (404c) nicht generisch ist, die Geschäftsregel während der Erzeugung der Tabelle mit der Regeltypspalte (404c) definiert wird und für alle die Zeilen gleich ist.

2. Computerprogrammprodukt, das computerlesbare Anweisungen umfasst, die wenn sie auf ein geeignetes System geladen und ausgeführt werden, die Schritte des Verfahrens nach Anspruch 1 durchführen.

3. Computerlesbares System zur Erweiterung einer Datendefinitionssprache DDL (410), um einen neuen Spaltentyp, auf den als eine Regeltypspalte (404c) Bezug genommen wird, in eine Tabelle einer Datenbank (404) einzuführen, wobei das System umfasst:
einen oder mehrere Prozessoren; und
ein Softwareprogramm, das von dem einen oder den mehreren Prozessoren ausgeführt wird und das Computersystem das Verfahren nach Anspruch 1 durchführen lässt.

## Revendications

1. Procédé mis en oeuvre par ordinateur d'extension d'un langage de définition de données, DDL (410), pour introduire un nouveau type de colonne qui est désigné par colonne de type règle (404c) dans un tableau d'une base de données (404), le procédé comprenant :
fournir (482) une base de données (404) comprenant des données organisées en rangées (404a) et colonnes (404b) ;
recevoir une déclaration DDL (411) pour créer un tableau dans la base de données (404), le tableau comprenant la colonne de type règle (404c), dans lequel la déclaration DDL (411) reflète la logique d'une règle commerciale ;
créer la colonne de type règle (404c) dans le tableau de la base de données conformément à la déclaration DDL (411) pour définir si la colonne de type règle (404c) est transitoire ou non transitoire et si la colonne de type règle (404c) est générique ou non générique ;
dériver (492), au cours d'une interrogation ou d'une opération d'insertion ou de mise à jour, une valeur du tableau de la base de données (404) pour la colonne de type règle (404c) ; et
afficher (494) la valeur dérivée pour la colonne de type règle (404c) ;
dans lequel :
lorsque la colonne de type règle (404c) est transitoire, la valeur pour la colonne de type règle (404c) est dérivée uniquement au cours d'une exécution d'interrogation et n'est pas persistée dans le tableau de la base de données ;
lorsque la colonne de type règle (404c) est non transitoire, la valeur pour la colonne de type règle (404c) est dérivée au cours d'une opération d'insertion ou de mise à jour et est persistée dans le tableau de la base de données ;
lorsque la colonne de type règle (404c) est générique, la règle commerciale n'est pas définie au cours de la création du tableau incluant la colonne de type règle (404c) mais spécifiée au cours d'une opération d'insertion ou de mise à jour ; et
lorsque la colonne de type règle (404c) est non générique, la règle commerciale est définie au cours de la création du tableau incluant la colonne de type règle (404c) et la même pour l'ensemble des rangées.

2. Produit de programme informatique comprenant des instructions lisibles par ordinateur qui, lors de leur chargement et exécution sur un système approprié, réalisent les étapes du procédé selon la revendication 1.

3. Système informatique d'extension d'un langage de définition de données, DDL (410), pour introduire un nouveau type de colonne qui est désigné par colonne de type règle (404c) dans un tableau d'une base de données (404), le système comprenant :
un ou plusieurs processeurs ; et
un programme logiciel exécuté par le ou les processeurs et faisant réaliser au système informatique le procédé selon la revendication 1.
